# EUROPÄISCHE PATENTSCHRIFT

(11) **EP 2 529 137 B1**
(45) Veröffentlichungstag und Bekanntmachung des Hinweises auf die Patenterteilung: **19.03.2014**
(21) Anmeldenummer: 11714677.9
(22) Anmeldetag: 25.01.2011
(51) Int. Cl.: F16K 17/04, F16K 15/02, F16K 17/06

(54) **DRUCKBEGRENZUNGSVENTIL**
PRESSURE RELIEF VALVE
SOUPAPE DE LIMITATION DE PRESSION

(30) Priorität: 28.01.2010 DE 102010006223
(43) Veröffentlichungstag der Anmeldung: 05.12.2012
(73) Patentinhaber: Voss, Wolfgang, 58239 Schwerte (DE)
(72) Erfinder: Voss, Wolfgang, 58239 Schwerte (DE)
(74) Vertreter: Schulte & Schulte
(86) Internationale Anmeldenummer: PCT/DE2011/000070
(87) Internationale Veröffentlichungsnummer: WO 2011/091786

(56) Entgegenhaltungen:
- DE-A1- 3 508 986
- DE-A1- 3 518 472
- DE-A1- 10 227 976
- FR-A- 1 261 612

## Beschreibung

Die Erfindung betrifft ein Druckbegrenzungsventil für den Einsatz in Hydraulik-,Öl-in-Wasser- und Wasser-Aggregaten, insbesondere für im untertägigen Berg- und Tunnelbau bei einem Druck von über 400 bar eingesetzte Hydraulikstempel mit einer gegen die Kraft einer einstellbaren Ventilfeder zwischen Druckmitteleinlass, Ringkanal und Druckmittelauslass verschiebbar angeordneten Schließeinheit, die über die Ventilfeder bei Normaldruck in einer Dichtposition gehalten ausgeführt ist.

Derartige Druckbegrenzungsventile werden in den unterschiedlichsten Industriebereichen eingesetzt, um Druckspitzen im Hydrauliksystem zu vermeiden oder schnell abzubauen. Im untertägigen Berg- und Tunnelbau werden sie zum Schutz des hydraulischen Strebausbaus oder der Einzelstempel eingesetzt (DE 35 08 986 A1). Diese Druckbegrenzungsventile sind so in den Hydraulikkreislauf bzw. Öl-in-Wasser-Kreislauf eingeschaltet, dass sie bei plötzlicher Überlast, beispielsweise durch Gebirgsschläge oder durch andere Senkungen des Hangenden, das in den Stempeln anstehende Druckmedium so austreten lassen, dass im Hydraulik- bzw. Öl-in-Wasser-Aggregat kein gefährlicher Überdruck entsteht bzw. dieser sehr schnell abgebaut wird. Diese Druckbegrenzungsventile im untertägigen Strebausbau haben sich hervorragend bewährt. Aufgrund immer komplizierterer Systeme müssen auch die Druckbegrenzungsventile diesen besonderen Bedingungen angepasst werden, indem sie vor allem hohe Durchflusswerte garantieren. Gegen die Beeinflussung durch weitere Ventile oder andere Einrichtungen werden Druckdämpfungskammern eingesetzt, wie aus der DE 102 27 976 A1 bekannt. Bei diesen Druckbegrenzungsventilen wird das Druckmedium von der im unteren Teil des Druckbegrenzungsventils angeordneten Druckmittelzuführung an das Hydraulik- bzw. Öl-in-Wasser- bzw. Wasser-System eingeführt, wobei das Druckmedium gegen einen Ventilkolben ansteht, der bei entsprechenden Druckspitzen gegen eine einstellbare Ventilfeder verschoben wird und dabei den Durchfluss des Druckmediums entweder zu seitlichen Auslässen ermöglicht oder aber in Achsrichtung des Ventils angeordneten Druckmittelauslässen. Aufgrund der Anschlüsse und der Bohrungen innerhalb solcher Druckbegrenzungsventile ist die maximal erreichbare Durchflussmenge allerdings begrenzt. Aus der DE 35 18 472 A1 ist ein Druckbegrenzungsventil bekannt, bei dem eine Art Druckvergleichmäßigungskammer vor dem Druckmittelauslass ausgebildet ist. Diese Kammer trägt kein Bezugszeichen und ist im Text nicht erläutert. Für den Ventilkolben sind so genannte Haltekanten vorgesehen um die Montage von der Innenbohrung her abzusichern. Eine Art Ringkanal ist Teil des Druckmittelauslasses. Auch bei dem aus der FR 1 261 612 A bekannten System zur Kontrolle des Drucks einer Flüssigkeit ist ein solcher Ringkanal der Auslassseite zugeordnet.

Der Erfindung liegt daher die Aufgabe zu Grunde, ein Druckbegrenzungsventil für Durchflussmengen von 10.000 und mehr m³/min. zu schaffen, das hohe Drücke zulässt und sicher arbeitet und optimal geringe Abmessungen aufweist.

Die Aufgabe wird erfindungsgemäß dadurch gelöst, dass der Ringkanal als Teil des Druckmitteleinlasses über die Schließeinheit gegenüber dem Druckmittelauslass abgedichtet ist, wobei die Schließeinheit bei Druckspitzen gegen die Kraft der Ventilfeder in die Offenstellung bewegbar ist und dass zur einfachen Ausbildung der Ventilfeder die Schließeinheit und/oder die sie aufnehmende Innenbohrung gestuft und damit eine Andruckkraft bewirkend ausgebildet sind.

Bei einem derart ausgebildeten Druckbegrenzungsventil ist durch den Ringkanal, der Druckmitteleinlass und Druckmittelauslass verbindet, gesichert, dass eine ausreichend große Druckflüssigkeitsmenge beim Öffnen des Ventils das Ventil passieren kann. Die Schließeinheit sorgt dafür, dass dieses im Ringkanal anstehende Druckmedium im Falle von Druckspitzen in Richtung Druckmittelauslass strömen kann, wobei die für das Einstellen auf die Druckspitzen wichtige Ventilfeder verhältnismäßig einfach und günstig ausgebildet sein kann, weil im Bereich des Ventilschaftes sich eine Andruckkraft dazu ausbilden kann. Der Ventilschaft bzw. das Ventilgehäuse sind entsprechend aufgebaut.

Nach einer zweckmäßigen Ausbildung der Erfindung ist vorgesehen, dass der Druckmitteleinlass in den bis zum Federraum führenden und im Ventilschaft und/oder in der Wandung des Ventilgehäuses ausgesparten Ringkanal übergeht, dass die Schließeinheit als Ventilkolben mit einem Kopfende in Form eines Dichtkegels aus einem eine hohe Kugeldruckhärte aufweisenden, reversiblen Kunststoff und einem in der Innenbohrung geführten Ventilschaft ausbildet ist, und dass die den Ventilschaft aufnehmende Innenbohrung im Bereich des Dichtsitzes für den Dichtkegel und einem am unteren Ende der Innenbohrung vorgesehenen Wandungsspitzring eine gestufte Wandung aufweist. Die Öl-in-Wasser-Emulsion wirkt auf den Ventilkolben mit seinem besonders ausgebildeten Dichtkegel im Falle von Druckspitzen so ein, dass der Dichtkegel aus dem Dichtsitz herausgedrückt wird, wobei dann am Dichtkegel und dem Dichtsitz entlang entsprechend große vom Ringkanal hereinströmende Druckmediumsmengen in den Federraum und von dort aus zum Druckmittelauslass abströmen können. Ist der entstandene Druck abgebaut, schließt das Ventil wieder, indem der Dichtkegel sich über die Ventilfeder in den Dichtsitz hineinbewegt und dort abdichtet. Dadurch, dass die Wandung der Innenbohrung gestuft ausgebildet ist, und zwar so, dass eine Andruckkraft entsteht, können relativ kleine und einfache, sozusagen schwache Ventilfedern zum Einsatz kommen, sodass das ganze Druckbegrenzungsventil mit vorteilhaft geringen Baumaßen verwirklicht werden kann. Aufgrund dieses geschickten Aufbaus des Druckbegrenzungsventils kann der seitliche Druckmitteleinlass beispielsweise ein DN32 sein, was wiederum die Möglichkeit gibt, nicht nur große Durchflussmengen in kurzen Zeitabschnitten abzuführen, sondern auch das Druckbegrenzungsventil direkt in den Steuerungsmechanismus mit einzubeziehen, beispielsweise einem Steuerventil zuzuordnen. Ein wirksamer Schutz der kostenaufwendigen Steuerungseinheit kann so mit verhältnismäßig geringem Aufwand verwirklicht werden.

Neben der Möglichkeit, die Andruckkraft durch die gestufte Wandung der Innenbohrung zu erzeugen, ist auch die Möglichkeit gegeben, dass der Ventilschaft eine gestufte Außenwandung aufweist und die Innenwandung glatt durchgehend geformt ist. Die Ventilfeder ist zweckmäßigerweise als der als Differenzinnenbohrung geformten Innenbohrung angepasste Zylinderfeder ausgebildet. Eine solche Zylinderfeder kann sehr feinfühlig arbeitet und sichert die gleichmäßige und rechtzeitige Bewegung des Ventilkolbens in allen Situationen.

Weiter vorne ist bereits darauf hingewiesen worden, dass der Dichtkegel zweckmäßigerweise aus einem eine hohe Kugeldruckhärte aufweisenden, reversiblen Kunststoff hergestellt ist. Ein so ausgebildeter Dichtkegel kann auch auf zweckmäßige Art und Weise mit dem eigentlichen Ventilkolben verbunden werden, wozu vorgesehen ist, dass der aus Spezialkunststoff POM oder PET bestehende Dichtkegel lösbar mit dem Ventilschaft vorzugsweise über eine den Federteller miterfassende Senkschraube verbunden ist und über eine Kugeldruckhärte von 50 - 160 N/mm² verfügt. Somit braucht nicht der Kunststoff den gesamten Druck der Senkschraube aufzunehmen, sondern er wird von aus Metall bestehenden Federtellern mit übernommen, doch kann so eine wirksame Einheit gebildet werden und damit auch wiederum sichergestellt werden, dass der Dichtkegel sich genau in die vorgesehene Dichtflächen hineinsetzt und so eine vollständige Abdichtung bewirkt. Der besondere Kunststoff wird beispielsweise auch unter der ergänzenden Bezeichnung Polyacetal vertrieben und wird als hochkristalliener, thermoplastischer Kunststoff mit hoher Festigkeit und Steifigkeit sowie guten Eigenschaften und Verschleißfestigkeit bei geringer Feuchtigkeitsaufnahme beschrieben. Er verfügt darüber hinaus über eine gute Dimensionsstabilität und besonders gute Ermüdungsfestigkeit sowie hervorragende Spannbarkeit, sodass er für den hier vorgesehenen Einsatz bestens geeignet ist.

Einmal um Dichtsitz und Dichtkegel eine besonders günstige Abdichtung bewirkende Form zu geben und um die stabile Einheit zwischen Dichtkegel und Ventilschaft zu garantieren, sieht die Erfindung vor, dass die in eine Trichterbohrung am Kopfende des Ventilschaftes einführbare Spitze des Dichtkegels kegelstumpfartig ausgebildet ist. Durch diese besondere Formgebung der Spitze des Dichtkegels wird das bei Bedarf notwendige Ablösen des Dichtkegels erleichtert und die vom Druckmedium beaufschlagte Fläche des Dichtkegels auf das notwendige Maß begrenzt.

Sowohl der der Senkschraube zugeordnete Dichtring wie auch der als Rechteck-Dichtring bezeichnete Dichtring haben eine besondere Form und bestehen aus einem besonderen Material. Hierzu ist gemäß der Erfindung vorgesehen, dass am unteren Ende des Ventilschaftes ein aus PTFE bestehender Rechteck-Dichtring angeordnet und über eine Ringschraube mit umlaufender Spitze gegen den Wandungsspitzring angepresst ist. Damit ist verhindert, dass das Druckmedium aus dem Druckmittelzufluss sich über die Innenbohrung nach außen bewegt und dann am unteren Ende des Druckbegrenzungsventils in die Atmosphäre austritt. Der PTFE-Ring bzw. der Rechteck-Dichtring kann über die Ringschraube wirksam festgesetzt und gleichzeitig in die optimale Dichtposition gebracht werden, insbesondere weil er mit der umlaufenden Spitze ausgerüstet ist, die für das Andrücken an den Ventilkolben Sorge trägt. Der so genannte Wandungsspitzring bildet das Widerlager für die Ringschraube und dient weiter der Bildung der Andruckkraft, wie weiter hinten erläutert ist.

Die Andruckkraft in der gewünschten Größenordnung wird insbesondere dadurch erzeugt und gewährleistet, dass der die Andruckkraft mit bestimmende Wandungsspitzring der Innenbohrung einen Innendurchmesser von 39 mm und die weiter bestimmende Wandung kurz vor dem Dichtsitz einen Innendurchmesser von 40 mm aufweisen. Die so geschaffene Andruckkraft bringt insbesondere die Möglichkeit, mit verhältnismäßig kleinen und schwachen Ventilfedern auszukommen, was wiederum die Baumaßreduzierung ermöglicht.

Die Ringschraube mit ihrer Unterseite bzw. die entsprechend gestufte Innenbohrung bildet die als Federsicherung dienende und als Deckel ausgebildete Bewegungssperre. Der im Durchmesser größere Deckel fährt also gegen die Bewegungssperre und bietet damit gleichzeitig einen Blockierschutz für die Ventilfeder, gibt den notwendigen Öffnungsquerschnitt frei und sichert gleichzeitig, dass der Dichtkegel sich in kürzester Zeit wieder in den Dichtsitz zurückbewegt, wenn die Druckmittelspitze überwunden ist.

Der Ventilschaft kann die für seine Funktion optimale Länge aufweisen, wenn er wie erfindungsgemäß vorgesehen, dem Ventilschaft eine Führungshülse zugeordnet ist, die zwischen dem Wandungsspitzring und dem Vorbereich des Drückmitteleinlasses den Ventilschaft umfassend in einem Längsnutring angeordnet ist. Diese Führungshülse umgibt den Ventilschaft und führt ihn über eine gewisse Länge, sodass er leicht gleitend aus der Dichtposition in die Öffnungsposition und umgekehrt verschoben werden kann.

Die Kraft der Ventilfeder kann auf einfache Weise den jeweiligen Bedingungen entsprechend eingestellt werden, wenn wie erfindungsgemäß vorgesehen, das Ventilgehäuse aus miteinander verschraubbar verbundenen Ventilgehäuseteilen besteht, wobei die Ventilfeder zwischen ihnen eingespannt angeordnet ist.. Eine Einstellung der Ventilfeder ist auf diese Art und Weise von außen her mit geringem Aufwand möglich, wobei theoretisch vorgesehen sein kann, dass beide Gehäuseteile oder eines rechteckig ausgebildet ist, um einen Hilfsschlüssel ansetzen zu können.

Bei der bisher beschriebenen Ausführungsform wird die Ventilfeder beim Ansprechen des Ventils auf Druck beansprucht, weil der Ventilkolben gegen die Kraft der Ventilfeder in den Federraum hineinbewegt wird. Dabei ist der Druckmitteleinlass seitlich vorgesehen. Ist eine solche Anordnung des Druckmitteleinlasses nicht möglich oder wird aus anderen Gründen beispielsweise eine noch kürze Ausbildung des gesamten Ventilgehäuses gewünscht, so ist es zweckmäßig, wenn die Schließeinheit als auf dem Ventilkolben gegen die Kraft der Ventilfeder verschiebbares Ventilgehäuse ausgebildet ist und dass als Druckmitteleinlass eine bis zum oberen Ende des starren Ventilkolbens hochgeführte und über Radialbohrungen mit dem Ringkanal verbundene Sackbohrung dient.. Diese Ausführung unterscheidet sich vor allem dadurch, dass nicht der Ventilkolben durch das Druckmedium beeinflusst wird, sondern vielmehr das Ventilgehäuse, das hier auf dem Ventilkolben verschieblich angeordnet ist und dabei die das Ventilgehäuse umgebende Ventilfeder beeinflusst, sodass hier bei dieser Ausführung die "schwache" Ventilfeder beim Ansprechen gleichmäßig beansprucht wird. Die Ventilfeder sorgt dann dafür, dass beim Nachlassen des Druckes das Ventilgehäuse wieder in den Dichtsitz zurückgedrückt wird. Die das Ventilgehäuse umgebende Ventilfeder ist wiederum durch ein Schutzgehäuse abgedeckt, in dessen Boden der Ventilkolben festgelegt ist. Zweckmäßig ist es, die die Andruckkraft bewirkende Ausbildung der Wandung so vorzusehen, dass die gestufte Außenwandung bzw. die gestufte Wandung der Innenbohrung zwischen dem Dichtsitz für den oberen Dichtring und einem am unteren Ende des Ventilschaftes angeordneten, rechteckigen Dichtring ausgebildet ist.

Um die Ventilfeder schnell und einfach einstellen zu können, ist vorgesehen, dass der Ventilkolben im Boden eines das Ventilgehäuse umgebenden Schutzgehäuses über ein Gewinde festlegbar ist, über Hilfsbohrungen im Kolbenkopf verfügt und mit dem Federteller über eine Senkschraube verbunden ist. Die Einstellung der Feder erfolgt in der Regel bei der Montage des Ventils, sodass die Festlegung des Ventilkolbens im Boden erfolgen kann, bevor der Dichtkegel auf den Kolbenkopf aufgesetzt und aufgeschraubt wird. Das Ventilgehäuse selbst kann dann auf dem Ventilkolben sich verschieben, wobei die Ventilfeder so angeordnet und mit dem Ventilgehäuse gekoppelt ist, dass sie dafür sorgen kann, dass das Ventilgehäuse nach Nachlassen des Druckes wieder in den Dichtsitz hineingedrückt wird.

Die vom Ventilgehäuse freigegebene Öffnungsweite kann dadurch genau eingestellt und vorgegeben werden, dass dem Ventilgehäuse eine Distanzkappe zugeordnet ist, die auf der Gehäuseaußenwandung verschiebbar und die Weite des Öffnungsspaltes am Dichtsitz mit 2 - 10 mm vorgebend ausgebildet und angeordnet ist. Dazu weist sowohl das Ventilgehäuse wie auch das Distanzteil bzw. die Distanzkappe ein korrespondierendes Gewinde auf, sodass mit wenig Aufwand der Öffnungsspalt genau eingestellt werden kann.

Eine weitere Ausbildung ist die bei der die Schließeinheit einen Ventilkolben mit einer axial verlaufenden und mit dem Druckmitteleinlass über Radialbohrungen verbundene Sackbohrung aufweist, wobei die Radialbohrungen in zwei Ebenen angeordnet sind und zwar im oberen und unteren Endbereich des Ventilkolbens und durch den Ringkanal miteinander verbunden, und dass der Ventilkolben die gestufte Außenwandung aufweist, wobei der größere Innendurchmesser der unteren Ebene der Radialbohrungen mit Dichtring zugeordnet ist. Beim Auftreten einer Druckspitze wird somit über die besondere Ausbildung der Andruckkraft dafür gesorgt, dass der Ventilkolben sich aus dem Ventilgehäuse herausschiebt, sodass nun die Druckflüssigkeit in das Schutzgehäuse und von diesem in die Umgebung austreten kann, ohne jemanden zu gefährden. Auch hier ist der Druckmitteleinlass seitlich angeordnet, sodass das Druckmittel sich über den Ringkanal schnell ausbreiten und auf den Ventilkolben einwirken kann. Wird der Ventilkolben festgelegt, verschiebt sich das Ventilgehäuse auf ihm nach oben oder aber wie erwähnt, schiebt er sich nach unten aus dem Ventilgehäuse heraus, je nach dem welche Wirkungsweise gewünscht wird.

Das Ausschieben des Ventilkolbens aus dem Ventilgehäuse heraus wird weiter dadurch abgesichert, dass der Ventilkolben oberhalb der oberen Ebene der Radialbohrungen eine einen Einschubendring vorgebende erweiterte Außenwandung aufweist, der einen größeren Außendurchmesser als die Innenbohrung aufweist. Der Ventilkolben ist somit in diese Richtung gesperrt und kann sich begünstigt durch die vorgegebene Andruckkraft gleichmäßig und sicher bewegen.

Sowohl für die Einstellung der Ventilfeder wie für den optimalen Betrieb des Ventils ist es von Vorteil, wenn die Ventilfeder zwischen Ventilgehäuse und Ventilkolben angeordnet und zwischen dem Federteller und dem Ventilgehäuse eingespannt ist. Da der Druckmitteleinlass rechtwinklig zum Ringkanal bzw. der Innenbohrung im Ventilkolben angesetzt ist, bildet er ein stabiles Widerlager für die Ventilfeder, die sich am gegenüberliegenden Ende am Ventilteller abstützen kann.

Während nach der zuvor beschriebenen Ausführungsform die Ventilfeder innerhalb des Ventilgehäuses angeordnet ist, sieht eine weitere Ausbildung der Erfindung vor, dass die Ventilfeder außerhalb des Ventilgehäuses dieses umfassend angeordnet und zwischen dem ebenfalls außerhalb des Ventilgehäuses angeordneten Federteller und einem ringförmigen Vorsprung am Ventilgehäuse eingespannt ist. Damit ist eine weitere Bauvariante geschaffen, wobei die Feder über das Schutzgehäuse ausreichend abgesichert ist, im Übrigen aber im hier beschriebenen Fall auch keine Gefährdung für die Belegschaft bilden kann.

Während weiter oben eine Ausführung beschrieben ist, bei der der Einschubring direkt am Ringkanalende ausgebildet ist, besteht auch die Möglichkeit, diesen weiter in den Bereich der Wandung des Ventilgehäuses zu legen, was gemäß Erfindung dadurch erreicht ist, dass der Einschubendring in die Innenbohrung einführbar und sich gegen einen Gehäuserand kurz vor dem oberen Dichtring abstützend ausgebildet ist. Auch durch diese Ausbildung ist sichergestellt, dass sich der Ventilkolben bei Druckbeaufschlagung nicht in den Federraum bzw. die Innenbohrung hinein bewegen kann, sondern nur in die entgegengesetzte Richtung, was wie erwähnt noch dadurch entscheidend begünstigt ist, dass eine gestufte Innenbohrung vorgegeben ist.

Die Erfindung zeichnet sich insbesondere dadurch aus, dass das vorgeschlagene Druckbegrenzungsventil sehr klein baut und damit insbesondere auch im Bereich der Steuereinheiten sehr gut einsetzbar ist. Darüber hinaus ist es so aufgebaut, dass mit verhältnismäßig einfachen kleinen Ventilfedern große Mengen an Druckmittel dann abgeführt werden, wenn das Ventil angesprochen hat und die Mengen durch die wiederum entsprechend groß bemessenen Abflusswege durch das Druckbegrenzungsventil hindurch in die Atmosphäre austreten können. Über die Radialbohrung und deren besondere Bemaßung strömt das Druckmedium durch das Druckbegrenzungsventil sicher auf den Dichtkegel des Ventilkolbens zu und hebt diesen aus dem Dichtsitz. Die Ventilfeder kann schnell und genau eingestellt werden, weil das Ventilgehäuse zweiteilig ausgebildet ist oder andere Ausbildungsmöglichkeiten und Ausbildungen für das Ventilgehäuse geschaffen sind und weil mit den schon erwähnten geringer bemessenen bzw. vereinfacht ausgeführten Ventilfedern gearbeitet werden kann. Möglich ist es auch, das Ventilgehäuse auf dem Ventilkolben verschiebbar anzuordnen und mit Hilfe der Ventilfeder vorzugeben, bei welchem Druck und welchen Gegebenheiten das Ventil anspricht und das sich verschiebende Ventilgehäuse einen ausreichend großen Öffnungsspalt freigibt.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Längsschnitt durch das Druckbegrenzungsventil rechts in geschlossener Position und links in geöffneter Position,
- Figur 2: eine Seitenansicht des Druckbegrenzungsventils,
- Figur 3: einen Längsschnitt durch das Druckbegrenzungsventil mit beweglichem Ventilgehäuse,
- Figur 4: eine Ansicht des unteren Gehäusebereiches des in Figur 5 im Schnitt gezeigten Ventils,
- Figur 5: einen Schnitt durch das Ventil gemäß Figur 1,
- Figur 6: das Ventil gemäß Figur 5 mit einer Ventilfeder außerhalb des Ventilgehäuses und
- Figur 7: das in Figur 6 gezeigte Ventil im Schnitt.

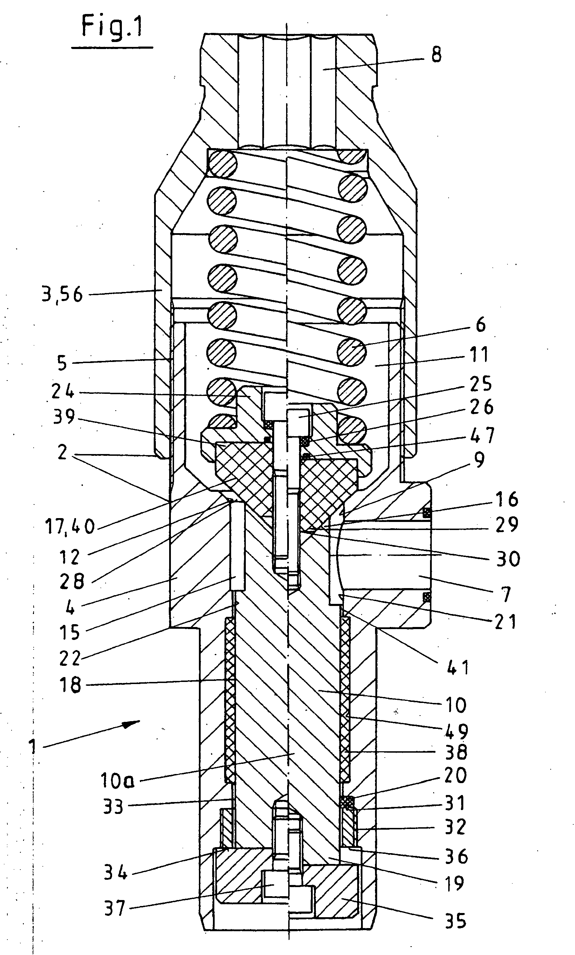

Figur 1 zeigt ein Druckbegrenzungsventil 1 im Querschnitt, wobei deutlich wird, dass das Ventilgehäuse 2 aus zwei Ventilgehäuseteilen 3 und 4 besteht. Beide Ventilgehäuseteile 3, 4 sind über ein Gewinde 5 gegeneinander verschiebbar, sodass die im Federraum 11 angeordnete Ventilfeder 6 entsprechend zu spannen ist, wenn beide Ventilgehäuseteile 3, 4 gegeneinander verdreht werden. Die Ventilfeder 6 im Federraum 11 drückt auf den Ventilkolben 10a, sodass dieser im Dichtsitz 12 so dicht angeordnet ist, dass Druckmittel bzw. Druckmedium bei "Normaldruck" den Bereich zwischen dem Druckmitteleinlass 7 und dem Dichtsitz 12 nicht verlassen kann.

Das Druckmittel wird über den Druckmitteleinlass 7 in den Ringkanal 15 geführt, der so angeordnet und ausgebildet ist, dass das Druckmittel optimal auf den Ventilkolben 10 bzw. dessen Dichtkegel 17 einwirken kann. Dabei ist die Ventilfeder 6 so eingestellt, dass bei Normaldruck der Ventilkolben 10a bzw. der Dichtkegel 17 nicht aus dem Dichtsitz 12 sich herausheben kann. Nur wenn durch einen Gebirgsschlag oder ähnliche Überlast der Druck des Druckmittels erhöht ist, wird der Ventilkolben 10a bzw. sein Dichtkegel 17 in der Innenbohrung 9 so verschoben, dass zwischen dem Dichtsitz 12 und dem Dichtkegel 17 ein Rundumspalt entsteht, durch den das Druckmittel in Richtung Druckmittelauslass 8 abströmen kann. Sinkt der Druck dann wieder, sorgt die Ventilfeder 6 dafür, dass sich das Ventil wieder schließt, d. h., dass der Dichtkegel 17 in den Dichtsitz 12 einfährt und dort wieder vollständig abdichtet.

Dieser Dichtkegel 17 besteht aus einem Spezialkunststoff, nämlich einem eine hohe Kugeldruckhärte aufweisenden, reversiblen Kunststoff, hier einem Polyacetal (POM) oder ähnlichem POM-Kunststoff bzw. PET. Wichtig ist die hohe Kugeldruckhärte und Steifigkeit, sowie die guten Gleiteigenschaften und den Verschließfestigkeit bei geringer Feuchtigkeitsaufnahme, wie sie der als Polyacetal bezeichnete Kunststoff aufweist.

Der Dichtkegel 17 ist mit dem Ventilschaft 18 über eine Senkschraube 25 verbunden, wobei diese im Federteller 24 lagert. Der Federteller 24 umfasst den zylindrischen Teil 39 des Dichtkegels 17, während das kegelstumpfförmige Dichtteil 40 in die Trichterbohrung 28 des Ventilschaftes 18 hineingezogen wird, wobei die Spitze 29 die Form eines Kegelstumpfes 30 ausweist, um ein unnötiges Festsitzen des Dichtkegels 17 in der Trichterbohrung 28 zu vermeiden.

Der Ringkanal 15 ist bei der in Figur 1 gezeigten Ausführung so ausgebildet, dass er in diesem Bereich den Durchmesser des Ventilkolbens 10a verringert bzw. den des Ventilschaftes 18. Er ist rundum gleich bemessen und bildet somit einen optimalen Abströmkanal für das über den Druckmitteleinlass 7 hereinströmende Druckmedium bzw. das Druckmittel.

Am unteren Ende 19 des Ventilschaftes 18 ist ein quadratisch ausgebildeter Dichtring 20 aus PTFE angeordnet, der über die Ringschraube 32 gegen den Wandungsspitzring 33 und die Außenwandung 22 des Ventilschaftes 18 angedrückt wird. Hierdurch erfolgt die wirksame Abdichtung, wobei der Wandungsspitzring 33 einen Innendurchmesser von 39 mm aufweist, während die Innenbohrung am gegenüberliegenden Ende, d. h. am Kopfende 16 des Ventilschaftes 18, einen Innendurchmesser von 40 mm aufweist. Dadurch entsteht eine gestufte Wandung 21 und damit eine Andruckkraft, die den Einsatz von einfacheren Ventilfedern 6 ermöglicht.

Die Ringschraube 32 zur Fixierung des Rechteck-Dichtringes 20 weist eine Spitze 31 auf, um den Dichtring 20 gezielt zu beeinflussen und darüber hinaus eine Unterseite 34, gegen die der Deckel 35 des Ventilschaftes 18 bzw. des Ventilkolbens 10a zum Anliegen kommt, wie dies auf der linken Halbseite der Darstellung wiedergegeben ist. Dadurch wird eine immer gleichmäßige Öffnung erreicht, wenn aufgrund des Druckes der Ventilkolben 10a aus dem Dichtsitz 12 heraus bewegt wird. Dieser gleichmäßige Öffnungsquerschnitt ermöglicht und sichert ein schnelles Abführen des Druckmittels und eine Abführung des Druckmittels in erheblicher Größenordnung, wobei 10.000 m³/min. als Mindestmaß angegeben ist. Der Deckel 35 dient hier als Bewegungssperre 36, wobei er über eine Schraube 37 mit dem eigentlichen Ventilschaft 18 verbunden ist.

Ferner ist zu erwähnen, dass der Ventilschaft 18 von einer Führungshülse 38 umgeben ist, die vom Wandungsspitzring 33 bis zum Vorbereich 41 am Druckmitteleinlass 7 heranreicht. Die Führungshülse 38 befindet sich in dem Längsnutring 49. Sie sorgt für eine gleichmäßige Bewegung des gesamten Ventilkolbens 10a in der Innenbohrung 9, wenn der beschriebene Überdruck auftritt und verhindert ein schädliches Verkanten.

Ähnlich wie der Rechteck-Dichtring 20 am unteren Ende 19 des Ventilschaftes 18 ist auch im Bereich des Kopfes der Senkschraube 25 ein Dichtring 26 vorgesehen. Auch er ist vorzugsweise mit einem quadratischen Querschnitt ausgerüstet und so angeordnet und unter Druck gesetzt, dass das Druckmittel nicht am Schaft der Senkschraube 25 entlang in den Federraum 11 1 eindringen kann. Zusätzlich ist ein kleiner Dichtring 47 so angeordnet, dass auch am Boden des Federtellers 24 entlang kein Druckmittel in Richtung Federraum 11 austreten kann.

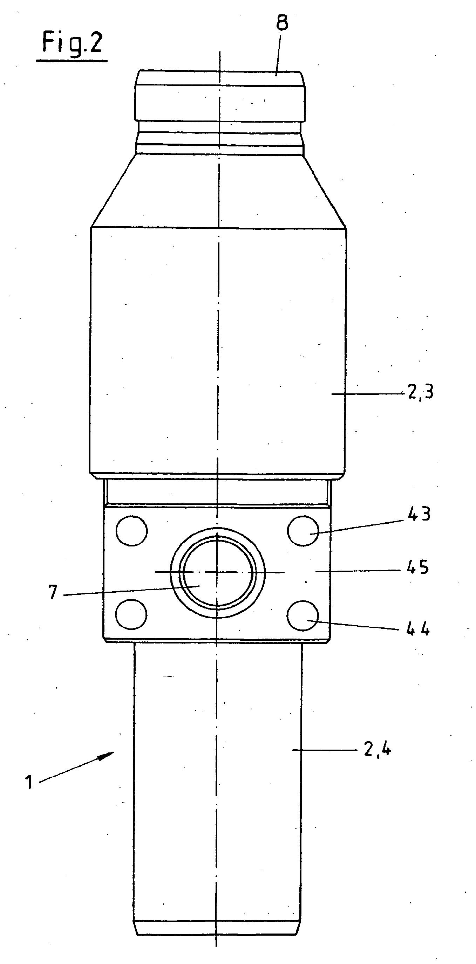

Figur 2 zeigt eine Seitenansicht des Druckbegrenzungsventil 1, wobei deutlich wird, dass das Ventilgehäuse 2 aus den beiden Ventilgehäuseteilen 3, 4 besteht, die gegeneinander verschraubt werden können. Im Bereich 45 des Druckmitteleinlasses 7 sind Fixierbohrungen 43, 44 vorgesehen, über die das Druckbegrenzungsventil 1 beispielsweise im Bereich einer Steuerung optimal im Gehäuse fixiert werden kann.

Das Ansprechen des Druckbegrenzungsventils 1 und das Verschieben gegen die Kraft der Ventilfeder 6, die relativ schwach und gering bemessen ist und hier z. B. 70 kg erbringt, ist sicher möglich, weil eine Andruckkraft durch die Form der Innenbohrung 9 auftritt, über den ein Zusammenfahren der Ventilfeder 6 erreicht wird. Hierzu ist der Durchmesseränderungssprung ausgebildet, der sich im Bereich des Wandungsspitzrings 33 und der Wandung 21 im Bereich des Dichtsitzes 12 ergibt. Dieser Durchmesseränderungssprung bzw. die sich daraus ergebende Andruckkraft sichert einen gleichmäßigen und sensiblen Verlauf des Ventilkolbens 10a, sodass mit der gezeigten und einfachen Ventilfeder 6 sicher gearbeitet werden kann. Der Durchmesseränderungssprung erbringt eine deutliche Erhöhung des Andruckes des Ventilkolbens 10a und damit den Einsatz solcher vorteilhaften Ventilfedern 6.

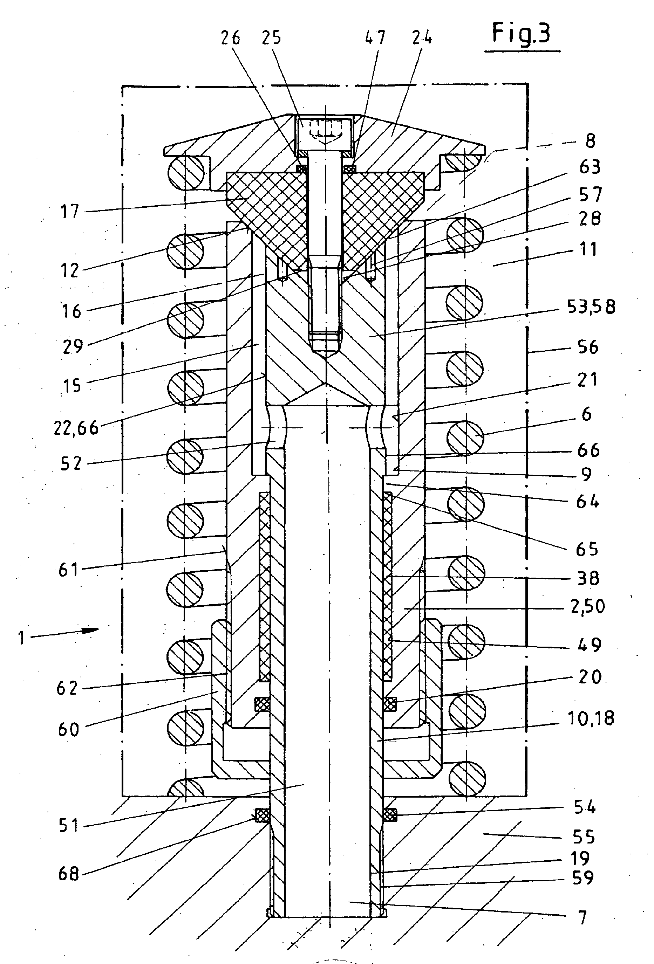

Das in Figur 3 dargestellte Druckbegrenzungsventil 1 entspricht in der Funktionsweise im Prinzip dem in Figur 1 und 2 dargestellten Druckbegrenzungsventil. Bei Figur 3 allerdings ist der Druckmitteleinlass 7 so gewählt und angeordnet, dass das Druckmittel vom Boden 55 her in das eigentliche Ventil eintreten kann. Dies hat konstruktive und von den Baumaßen her Vorteile, wobei das Druckmittel durch die im Ventilkolben 10a ausgebildete Sackbohrung 51 eintritt und durch die Radialbohrungen 52 am oberen Ende 53 des Ventilkolbens 10a in den Ringkanal 15 bzw. die Innenbohrung 9 eintritt. Von hier aus beeinflusst das Druckmedium das Ventil und öffnet es oder lässt es im geschlossenen Zustand. Abweichend von der Darstellung in den Figuren 1 und 2 ist hier nicht der Ventilkolben 10a die Schließeinheit, sondern vielmehr das Ventilgehäuse 2, das verschieblich auf dem starren Ventilkolben 10a angeordnet ist. Die Schließeinheit ist mit dem Bezugszeichen 50 versehen. Dieser Ventilkolben 10a wird in den Boden 55 des Schutzgehäuses 56 eingedreht, wozu beide über ein Gewinde 59 verfügen. Am Kolbenkopf 58 sind Hilfsbohrungen 57 vorgesehen, sodass vor dem Aufsetzen des Dichtkegels 17 zunächst einmal der Ventilkolben 10a bzw. sein Ventilschaft 18 entsprechend weit in den Boden 55 eingedreht werden kann. Der Dichtring 54, der ebenfalls rechteckig ausgebildet ist und aus PTFE besteht, wird vorher in die Nut 68 im Boden 55 eingesetzt, sodass sie dann für die notwendige Abdichtung in diesem Bereich sorgen kann.

Nach dem Einschrauben des Ventilkolbens 10a in den Boden 55 wird dann der Dichtkegel 17 aufgesetzt und über die Senkschraube 25 festgelegt. Gleichzeitig ist damit der Federteller 24 festgelegt, der das obere Ende des Ventilkolbens 10a bildet. Gegen diesen Federteller 24 spannt sich die Ventilfeder 6, die am unteren Ende mit dem Ventilgehäuse 2 verbunden ist, das hier wie schon erwähnt als Schließeinheit 50 dient. Umgeben wird das Ganze durch das Schutzgehäuse 56, sodass die Ventilfeder 6 als solche keine Gefährdung darstellen kann. In diesem Schutzgehäuse 56 ist auch der hier nicht dargestellte Druckmittelauslass 8 angeordnet.

Das Ventilgehäuse 2 bzw. die Schließeinheit 50 weist am Bodenbereich mit dem Rechteck-Dichtring 20 eine Distanzkappe 60 auf. Diese Distanzkappe 60 ist über ein Gewinde 62 mit der Gehäuseaußenwandung 61 verbunden, sodass durch entsprechendes Betätigen des Distanzteils 60 vorgegeben werden kann, wie weit sich das Ventilgehäuse 2 vom Dichtkegel 17 wegbewegen kann, um so den Öffnungsspalt 63 vorzugeben bzw. freizugeben. Dieser Öffnungsspalt 63 befindet sich im Bereich des Dichtsitzes 12, wobei er durch die Position des Distanzteils 60 auf 4 - 6 mm bemessen bzw. vorgegeben sein soll.

Über die Länge des Ventilkolbens 10a ist dessen Wandung mit unterschiedlichem Durchmesser vorgegeben, wobei der entsprechende Sprung im Bereich des Absatzes 64 vorgesehen und mit 65 und 66 bezeichnet ist. 65 weist einen Durchmesser von 39 mm und 66 einen Durchmesser von 40 mm auf.

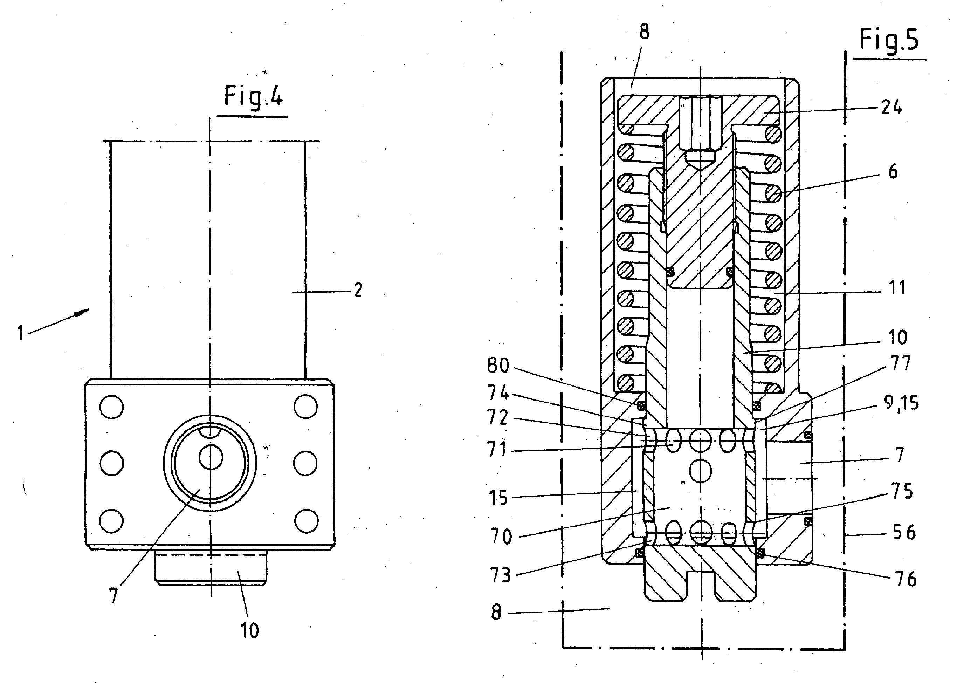

Die Figuren 4 und 5 zeigen ein Druckbegrenzungsventil bei dem beidseitig des Druckmitteleinlasses einen oberen Dichtring 80 und einen unteren Dichtring 76 gibt, die für die notwendige Abdichtung Sorge tragen. Darüber hinaus ist eine gestufte Innenwandung in der oberen Ebene 72 und der unteren Ebene 73 vorhanden, d. h. jeweils oberhalb der Radialbohrungen 71. Über diese Radialbohrung 71 strömt das Druckmedium aus dem Druckmitteleinlass 7 in den Ringkanal 15, wobei innerhalb des Ventilkolbens 10a eine Art Sackbohrung 70 ausgebildet ist. Strömt das Druckmedium bei auftretendem Überdruck so in diese Sackbohrung 70 bzw. in den Ringkanal 15, kann der Ventilkolben 10a nur nach unten in das Schutzgehäuse Richtung Druckmittelauslass 8 ausfahren, weil am Ventilkolben im oberen Endbereich 74 eine Einschubendring 77 ausgebildet ist. Da der Durchmesser im unteren Endbereich 75 wie erwähnt größer ist als im oberen Endbereich 74, kann der Ventilkolben 10a aber sowieso nur in Richtung unteren Endbereich 75 sich bewegen, sodass dann der Dichtring 76 überfahren und dass Druckmittel in Richtung Druckmittelauslass 8 abströmen kann. Mit 56 ist das Schutzgehäuse bezeichnet.

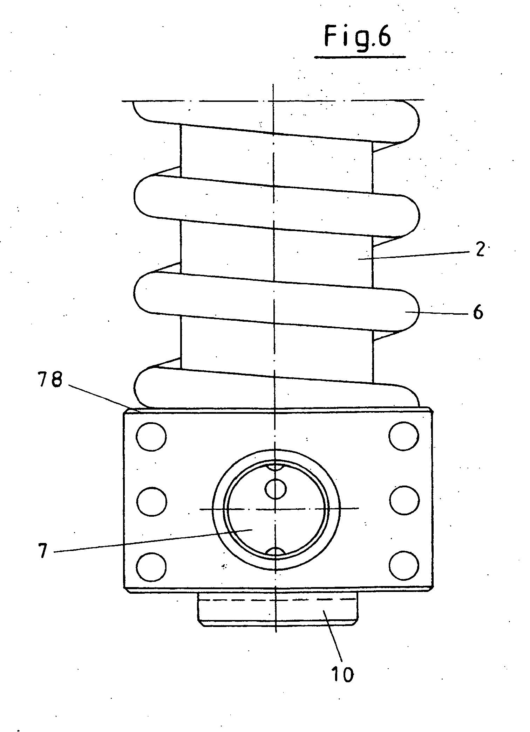

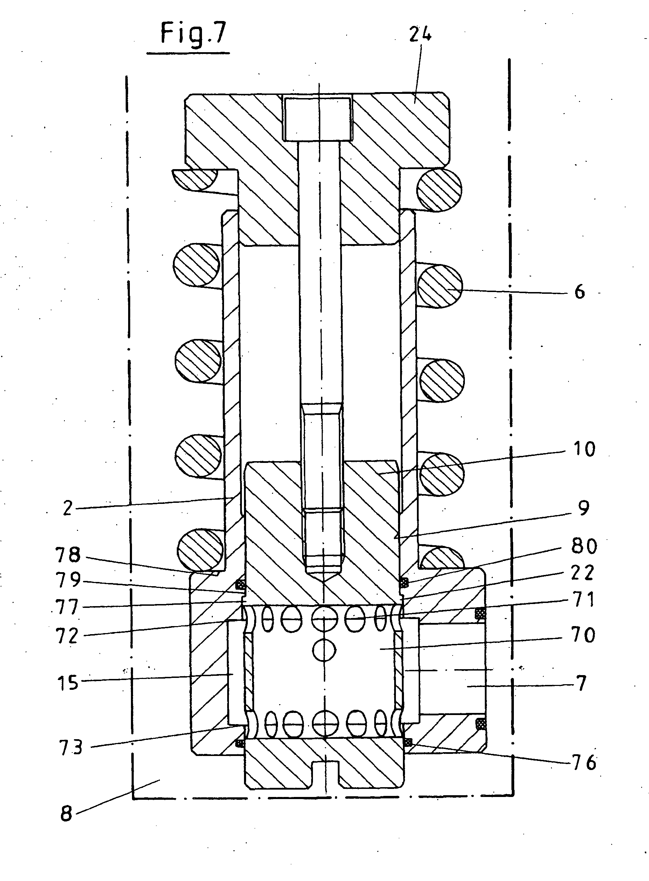

Sowohl bei der Ausführungsform nach Figur 4 und 5 als auch nach der der Figuren 6 und 7 weist das Druckbegrenzungsventil 1 zusätzlich das schon erwähnte Schutzgehäuse 56 auf. Der Ventilkolben 10a ist die Schließeinheit 10, während das Ventilgehäuse 2 keine Verschließeinheitsaufgabe wahrzunehmen hat. Nach der Ausbildung der Figuren 4 und 5 ist dabei die Ventilfeder 6 innerhalb des Ventilgehäuses 2 angeordnet, nach der Ausbildung der Figuren 6 und 7 aber außerhalb des Ventilgehäuses 2. Entsprechendes wird bei Betrachtung der Figuren 6 und 7 deutlich. Figur 7 zeigt das Druckbegrenzungsventil 1 gemäß Figur 6 im Längsschnitt, wobei deutlich wird, dass auch hier der Druckmitteleinlass 7 seitlich des Ventilgehäuses 2 angeordnet ist. Auch hier weist der Ventilkolben die Sackbohrung 70 mit den Radialbohrungen 71 auf, sodass das Druckmittel in den Innenraum des Ventilkolbens 10a einströmen kann, begünstigt durch den im Ventilgehäuse 2 ausgebildeten Ringkanal 15. Der Einschubendring 77 ist hier etwas in das Ventilgehäuse 2 hineingelegt und befindet sich in der Innenbohrung kurz vor dem oberen Dichtring 80. Die außerhalb des Ventilgehäuses 2 angeordnete Ventilfeder 6 stützt sich einmal am Federteller 24 und zum zweiten am ringförmigen Vorsprung 78 des Ventilgehäuses 2 ab.

Wie schon erwähnt ist der Einschubendring 77 in die Innenbohrung hineinverlegt, die dazu einen Gehäuserand 79 aufweist, gegen den dieser Einschubendring 77 anfahren kann.

Alle genannten Merkmale, auch die den Zeichnungen allein zu entnehmenden, werden allein und in Kombination als erfindungswesentlich angesehen.

## Patentansprüche

1. Druckbegrenzungsventil für den Einsatz in Hydraulik-, Öl-in-Wasser- und Wasser-Aggregaten, insbesondere für im untertägigen Berg- und Tunnelbau bei einem Druck von über 400 bar eingesetzte Hydraulikstempel mit einer gegen die Kraft einer einstellbaren Ventilfeder (6) zwischen Druckmitteleinlass (7), Ringkanal (15) und Druckmittelauslass (8) verschiebbar angeordneten Schließeinheit (10, 50), die über die Ventilfeder (6) bei Normaldruck in einer Dichtposition gehalten ausgeführt ist,
**dadurch gekennzeichnet,**
**dass** der Ringkanal (15) als Teil des Druckmitteleinlass (7) über die Schließeinheit (10, 50) gegenüber dem Druckmittelauslass (8) abgedichtet ist, wobei die Schließeinheit (10, 50) bei Druckspitzen gegen die Kraft der Ventilfeder (6) in die Offenstellung bewegbar ist und dass zur einfachen Ausbildung der Ventilfeder (6) die Schließeinheit (10, 50) und/oder die sie aufnehmende Innenbohrung (9) gestuft und damit eine Andruckkraft bewirkend ausgebildet sind.

2. Druckbegrenzungsventil nach Anspruch 1,
**dadurch gekennzeichnet,**
**dass** der Druckmitteleinlass (7) in den bis zum Federraum (11) führenden und im Ventilschaft (18) und/oder in der Wandung (21) des Ventilgehäuses (2) ausgesparten Ringkanal (15) übergeht, dass die Schließeinheit (10) als Ventilkolben (10a) mit einem Kopfende (16) in Form eines Dichtkegels (17) aus einem eine hohe Kugeldruckhärte aufweisenden, reversiblen Kunststoff und einem in der Innenbohrung (9) geführten Ventilschaft (18) ausgebildet ist, und dass die den Ventilschaft (18) aufnehmende Innenbohrung (9) im Bereich des Dichtsitzes (12) für den Dichtkegel (17) und einem am unteren Ende (19) der Innenbohrung (9) vorgesehenen Wandungsspitzring (33) eine gestufte Wandung (21) aufweist.

3. Druckbegrenzungsventil nach Anspruch 1,
**dadurch gekennzeichnet,**
**dass** die Außenwandung (22) des Ventilschaftes (18) gestuft ausgeführt ist.

4. Druckbegrenzungsventil nach einem der vorhergehenden Ansprüche,
**dadurch gekennzeichnet,**
**dass** der aus Spezialkunststoff POM oder PET bestehende Dichtkegel (17) lösbar mit dem Ventilschaft (18) und vorzugsweise über eine den Federteller (24) miterfassende Senkschraube (25) verbunden ist und über eine Kugeldruckhärte von 50 - 160 N/mm² verfügt.

5. Druckbegrenzungsventil nach einem der vorhergehenden Ansprüche,
**dadurch gekennzeichnet,**
**dass** die in eine Trichterbohrung (28) am Kopfende (16) des Ventilschaftes (18) einführbare Spitze (29) des Dichtkegels (17) kegelstumpfartig ausgebildet ist.

6. Druckbegrenzungsventil nach einem der vorhergehenden Ansprüche,
**dadurch gekennzeichnet,**
**dass** am unteren Ende (19) des Ventilschaftes (18) ein aus PTFE bestehender Rechteck-Dichtring (20) angeordnet und über eine Ringschraube (32) mit umlaufender Spitze (31) gegen den Wandungsspitzring (33) angepresst ist.

7. Druckbegrenzungsventil nach einem der vorhergehenden Ansprüche,
**dadurch gekennzeichnet,**
**dass** der die Andruckkraft mit bestimmende Wandungsspitzring (33) der Innenbohrung (9) einen Innendurchmesser von 39 mm und die weiter bestimmende Wandung (21) kurz vor dem Dichtsitz (12) einen Innendurchmesser von 40 mm aufweisen.

8. Druckbegrenzungsventil nach einem der vorhergehenden Ansprüche,
**dadurch gekennzeichnet,**
**dass** dem Ventilschaft (18) eine Führungshülse (38) zugeordnet ist, die zwischen dem Wandungsspitzring (33) und dem Vorbereich (41) des Druckmitteleinlasses (7) den Ventilschaft (18) umfassend in einem Längsnutring (49) angeordnet ist.

9. Druckbegrenzungsventil nach einem der vorhergehenden Ansprüche,
**dadurch gekennzeichnet,**
**dass** das Ventilgehäuse (2) aus miteinander verschraubbar verbundenen Ventilgehäuseteilen (3, 4) besteht, wobei die Ventilfeder (6) zwischen ihnen eingespannt angeordnet ist.

10. Druckbegrenzungsventil nach einem der vorhergehenden Ansprüche,
**dadurch gekennzeichnet,**
**dass** die Schließeinheit (50) als auf dem Ventilkolben (10a) gegen die Kraft der Ventilfeder (6) verschiebbares Ventilgehäuse (2) ausgebildet ist und dass als Druckmitteleinlass (7) eine bis zum oberen Ende (53) des starren Ventilkolbens (10a) hochgeführte und über Radialbohrungen (52) mit dem Ringkanal (15) verbundene Sackbohrung (51) dient.

11. Druckbegrenzungsventil nach einem der vorhergehenden Ansprüche,
**dadurch gekennzeichnet,**
**dass** der Ventilkolben (10a) im Boden (55) eines das Ventilgehäuse (2) umgebenden Schutzgehäuses (56) über ein Gewinde (59) festlegbar ist, über Hilfsbohrungen (57) im Kolbenkopf (58) verfügt und mit dem Federteller (24) über eine Senkschraube (25) verbunden ist.

12. Druckbegrenzungsventil nach einem der vorhergehenden Ansprüche,
**dadurch gekennzeichnet,**
**dass** dem Ventilgehäuse (2) eine Distanzkappe (60) zugeordnet ist, die auf der Gehäuseaußenwandung (61) verschiebbar und die Weite des Öffnungsspaltes (63) am Dichtsitz (12) mit 2 - 10 mm vorgebend ausgebildet ist.

13. Druckbegrenzungsventil nach Anspruch 1,
**dadurch gekennzeichnet,**
**dass** die Schließeinheit (50) einen Ventilkolben (10a) mit einer axial verlaufenden und mit dem Druckmitteleinlass (7) über Radialbohrungen (71) verbundene Sackbohrung (70) aufweist, wobei die Radialbohrungen (71) in zwei Ebenen (72, 73) angeordnet sind und zwar im oberen und unteren Endbereich (74, 75) des Ventilkolbens (10a) und durch den Ringkanal (15) miteinander verbunden, und dass der Ventilkolben (10a) die gestufte Außenwandung (22) aufweist, wobei der größere Innendurchmesser der unteren Ebene (73) der Radialbohrungen (71) mit Dichtring (76) zugeordnet ist.

14. Druckbegrenzungsventil nach Anspruch 13,
**dadurch gekennzeichnet,**
**dass** der Ventilkolben (10a) oberhalb der oberen Ebene (72) der Radialbohrungen (71) eine einen Einschubendring (77) vorgebende erweiterte Außenwandung (22) aufweist, der einen größeren Außendurchmesser als die Innenbohrung (9) aufweist.

15. Druckbegrenzungsventil nach Anspruch 13,
**dadurch gekennzeichnet,**
**dass** die Ventilfeder (6) zwischen Ventilgehäuse (2) und Ventilkolben (10a) angeordnet und zwischen dem Federteller (24) und dem Ventilgehäuse (2) eingespannt ist.

16. Druckbegrenzungsventil nach Anspruch 13,
**dadurch gekennzeichnet,**
**dass** die Ventilfeder (6) außerhalb des Ventilgehäuses (2) dieses umfassend angeordnet und zwischen dem ebenfalls außerhalb des Ventilgehäuses (2) angeordneten Federteller (24) und einem ringförmigen Vorsprung (78) am Ventilgehäuse (2) eingespannt ist.

17. Druckbegrenzungsventil nach Anspruch 14 und Anspruch 16,
**dadurch gekennzeichnet,**
**dass** der Einschubendring (77) in die Innenbohrung (9) einführbar und sich gegen einen Gehäuserand (79) kurz vor dem oberen Dichtring (80) abstützend ausgebildet ist.

## Claims

1. Pressure limiting valve for use in hydraulic, oil-in-water and water aggregates, in particular for hydraulic struts used in underground mining and tunnel construction at a pressure of over 400 bar with a closing unit (10, 50) arranged in such a way as to be slid between the pressurising agent inlet (7), the ring channel (15) and the pressurising agent outlet (8) against the force of an adjustable valve spring (6), said closing unit (10, 50) being designed in such a way as to be held in a sealing position by the valve spring (6) at normal pressure,
**characterised by the fact**
that the ring channel (15), as part of the pressurising agent inlet (7), is sealed off from the pressurising agent outlet (8) by the closing unit (10, 50), whereby the closing unit (10, 50) can be moved against the force of the valve spring (6) and into the open position during pressure peaks and that the closing unit (10, 50) and/or the internal hole (9) receiving it are designed to be graduated for the simple configuration of the valve spring (6) and thus to cause a contact compression force.

2. Pressure limiting valve according to claim 1,
**characterised by the fact**
that the pressurising agent inlet (7) goes over into the ring channel (15) leading into the spring chamber (11) and recessed in the valve stem (18) and/or in the wall (21) of the valve housing (2), that the closing unit (10) is designed as a valve piston (10a) with a head (16) in the form of a sealing cone (17) made of a reversible plastic with a high ball impression hardness and a valve stem (18) led in the internal hole (9), and that the internal hole (9) receiving the valve stem (18) has a graduated wall (21) in the area of the sealing seat (12) for the sealing cone (17) and a wall projection ring (33) allowed for at the lower end (19) of the internal hole (9).

3. Pressure limiting valve according to claim 1,
**characterised by the fact**
that the outer wall (22) of the valve stem (18) is executed as graduated.

4. Pressure limiting valve according to one of the preceding claims,
**characterised by the fact**
that the sealing cone (17) made of special plastic POM or PET is detachably connected with the valve stem (18) and preferably via one of the countersunk screws (25) in contact with the spring collar (24) and has a ball impression hardness of 50 - 160 N/mm².

5. Pressure limiting valve according to one of the preceding claims,
**characterised by the fact**
that the peak (29) of the sealing cone (17), insertable into a hopper hole (28) at the head (16) of the valve stem (18), is designed to be frustoconical.

6. Pressure limiting valve according to one of the preceding claims,
**characterised by the fact**
that, at the lower end (19) of the valve stem (18), a rectangular sealing ring (20) made of PTFE is arranged and pressed against the wall projection ring (33) via a ring bolt (32) with an all-round point (31).

7. Pressure limiting valve according to one of the preceding claims,
**characterised by the fact**
that the wall projection ring (33) of the internal hole (9) with a determining influence on the contact pressure has an inside diameter of 39 mm and the wall (21) with a further determining influence has an inside diameter of 40 mm just before the sealing seat (12).

8. Pressure limiting valve according to one of the preceding claims,
**characterised by the fact**
that the valve stem (18) has a guide sleeve (38) allocated to it, which is arranged, surrounding the valve stem (18), in a longitudinal groove ring (49) between the wall projection ring (33) and the area (41) before the pressurising agent inlet (7).

9. Pressure limiting valve according to one of the preceding claims,
**characterised by the fact**
that the valve housing (2) consists of screwable connected valve housing parts (3, 4), whereby the valve spring (6) is arranged and clamped between them.

10. Pressure limiting valve according to one of the preceding claims,
**characterised by the fact**
that the closing unit (50) is designed as a valve housing (2) that can be slid on the valve piston (10a) against the force of the valve spring (6) and that a blind hole (51) leading up to the upper end (53) of the rigid valve piston (10a) and connected with the ring channel (15) via radial holes (52) serves as a pressurising agent inlet (7).

11. Pressure limiting valve according to one of the preceding claims,
**characterised by the fact**
that the valve piston (10a) can be fixed at the bottom (55) of a protective housing (56) surrounding the valve housing (2) via a thread (59), has auxiliary holes (57) in the piston top (58) and is connected with the spring collar (24) via a countersunk screw (25).

12. Pressure limiting valve according to one of the preceding claims,
**characterised by the fact**
that the valve housing (2) has a spacer cap (60) allocated to it, which can be slid on the housing outer wall (61) and is designed in such a way as to predetermine the width of the opening gap (63) at the sealing seat (12) of 2 - 10 mm.

13. Pressure limiting valve according to claim 1,
**characterised by the fact**
that the closing unit (50) has a valve piston (10a) with a blind hole (70) running in an axial direction and connected with the pressurising agent inlet (7) via radial holes (71), whereby the radial holes (71) are arranged in two levels (72, 73), namely the upper and lower end range (74, 75) of the valve piston (10a) and are connected with one another via the ring channel (15), and that the valve piston (10a) shows the graduated outer wall (22), whereby the larger inside diameter is allocated to the lower level (73) of the radial holes (71) with a sealing ring (76)

14. Pressure limiting valve according to claim 13,
**characterised by the fact**
that the valve piston (10a) has, above the upper level (72) of the radial holes (71), an extended outer wall (22) allowing for a slide-in end ring (77) with a larger outside diameter than the internal hole (9).

15. Pressure limiting valve according to claim 13,
**characterised by the fact**
that the valve spring (6) is arranged between the valve housing (2) and valve piston (10a) and clamped between the spring collar (24) and the valve housing (2).

16. Pressure limiting valve according to claim 13,
**characterised by the fact**
that the valve spring (6) outside the valve housing (2) is arranged all the way round and is clamped between the spring collar (24), equally arranged outside of the valve housing (2), and a ring-shaped projection (78) at the valve housing (2).

17. Pressure limiting valve according to claim 14 and claim 16,
**characterised by the fact**
that the slide-in end ring (77) can be inserted into the internal hole (9) and is designed in such a way as to support itself against a housing edge (79) just before the upper sealing ring (80).

## Revendications

1. Limiteur de pression destiné à être utilisé dans les groupes hydrauliques, huile en eau et eau, notamment pour les étançons hydrauliques utilisés dans la construction minière ou de tunnels sous une pression supérieure à 400 bar, avec une unité de fermeture (10, 50) disposée de façon à pouvoir être coulissée entre l'admission du moyen de pression (7), le canal annulaire (15) et la sortie du moyen de pression (8), pouvant être réglée contre la force d'un ressort de soupape (6) et qui est conçue maintenue, à pression normale, dans une position étanche par le ressort de soupape (6),
**caractérisé par le fait**
**que** le canal annulaire (15), en tant que partie de l'admission du moyen de pression (7), est étanchéifié par le biais de l'unité de fermeture (10, 50) vis-à-vis de la sortie du moyen de pression (8), sachant que l'unité de fermeture (10, 50) peut être déplacée, en cas de pics de pression, en position ouverte contre la force du ressort de soupape (6) et que, pour former simplement le ressort de soupape (6), l'unité de fermeture (10, 50) et/ou le perçage intérieur qui la réceptionne (9), est échelonnée en produisant ainsi une force de pressage.

2. Limiteur de pression selon la revendication 1,
**caractérisé par le fait**
**que** l'admission du moyen de pression (7) passe progressivement dans le canal annulaire (15) menant jusqu'à la cavité du ressort (11) et réservé dans le corps de soupape (18) et/ou dans la paroi (21) du carter de soupape (2), que l'unité de fermeture (10) est conçue en tant que piston de soupape (10a) poussant une extrémité de tête (16) sous la forme d'un cône d'étanchéité (17) réalisé dans un plastique réversible présentant une dureté de pression conique élevée, et d'un corps de soupape (18) mené dans le perçage intérieur (9), et que le perçage intérieur (9) réceptionnant le corps de soupape (18) dans la zone du siège d'étanchéité (12) présente une paroi échelonnée (21) pour le cône d'étanchéité (17) et un anneau saillant placé devant la paroi (33) prévu à l'extrémité inférieure (19) du perçage intérieur (9).

3. Limiteur de pression selon la revendication 1,
**caractérisé par le fait**
**que** la paroi extérieure (22) du corps de soupape (18) est réalisée de façon échelonnée.

4. Limiteur de pression selon une des revendications précédentes,
**caractérisé par le fait**
**que** le cône d'étanchéité (17) consistant en un plastique spécial POM ou PET est relié de façon à pouvoir être détaché avec le corps de soupape (18), et est relié de de préférence par l'intermédiaire d'une vis à tête fraisée englobant un patin de ressort (24), et dispose d'une dureté de pression conique de 50 - 160 N/mm².

5. Limiteur de pression selon une des revendications précédentes,
**caractérisé par le fait**
**qu'**une pointe (29) pouvant être introduite dans un perçage en entonnoir (28) du cône d'étanchéité (17) sur l'extrémité de la tête (16) du corps de soupape (18) est conçue sous la forme d'un tronçon de cône.

6. Limiteur de pression selon une des revendications précédentes,
**caractérisé par le fait**
**qu'**un anneau d'étanchéité carré (20), consistant en PTFE, est disposé à l'extrémité inférieure (19) du corps de soupape (18) et est pressé, par l'intermédiaire d'une vis annulaire (32) ayant une pointe périphérique (31), contre l'anneau saillant placé devant la paroi (33).

7. Limiteur de pression selon une des revendications précédentes,
**caractérisé par le fait**
**que** l'anneau saillant placé devant la paroi (33) déterminant également la force de pressage du perçage intérieur (9) présente un diamètre intérieur de 39 mm et que la paroi la déterminant en outre (21) présente un diamètre intérieur de 40 mm peu avant le siège d'étanchéité (12).

8. Limiteur de pression selon une des revendications précédentes,
**caractérisé par le fait**
**qu'**une douille de guidage (38) est attribuée au corps de soupape (18), qui est disposée entre l'anneau saillant placé devant la paroi (33) et la zone (41) située devant l'admission du moyen de pression (7) en englobant le corps de soupape (18) dans un anneau à rainure (49).

9. Limiteur de pression selon une des revendications précédentes,
**caractérisé par le fait**
**que** le carter de soupape (2) consiste en pièces de carter de soupape (3, 4) reliées entre elles de façon à pouvoir être vissées, sachant que le ressort de soupape (6) est disposé entre elles en étant tendu.

10. Limiteur de pression selon une des revendications précédentes,
**caractérisé par le fait**
**que** l'unité de fermeture (50) est conçue sous la forme d'un carter de soupape (2) pouvant être coulissé sur le piston de soupape (10a) contre la force du ressort de soupape (6) et qu'un trou borgne (51) mené jusqu'à l'extrémité supérieure (53) du piston de soupape (10a) rigide et relié au canal annulaire (15) par l'intermédiaire de perçages radiaux (52), et sert d'admission du moyen de pression.

11. Limiteur de pression selon une des revendications précédentes,
**caractérisé par le fait**
**que** le piston de soupape (10a) peut être fixé dans le fond (55) d'un boîtier de protection (56) entourant le carter de soupape (2) par le biais d'un filetage (59), dispose de perçages auxiliaires (57) dans la tête du piston (58) et est relié avec un patin de soupape (24) par l'intermédiaire d'une vis à tête fraisée (25).

12. Limiteur de pression selon une des revendications précédentes,
**caractérisé par le fait**
**qu'**un capuchon de distance (60) est attribué au carter de soupape (2), qui peut être coulissé sur la paroi extérieure du boîtier (61), la largeur de l'interstice d'ouverture (63) sur le siège d'étanchéité (12) étant conçue avec la consigne de 2 - 10 mm.

13. Limiteur de pression selon la revendication 1,
**caractérisé par le fait**
**que** l'unité de fermeture (50) présente un piston de soupape (10a) possédant un trou borgne (70) suivant un parcours axial et relié à l'admission du moyen de pression (7) par l'intermédiaire de perçages radiaux (71), sachant que les perçages radiaux (71) sont disposés en deux niveaux (72, 73) et sont reliés entre eux dans la zone finale supérieure et inférieure (74, 75) du piston de soupape (10a) et à travers le canal annulaire (15), et que le piston de soupape (10a) présente la paroi extérieure (22) échelonnée, sachant que le plus grand diamètre du niveau inférieur (73) est attribué aux perçages radiaux (71) avec un anneau d'étanchéité (76).

14. Limiteur de pression selon la revendication 13,
**caractérisé par le fait**
**que** le piston de soupape (10a) présente, au-dessus du niveau supérieur (72) des perçages radiaux (71), une paroi extérieure (22) étendue précédant un anneau d'insertion (77), et qui présente un diamètre extérieur supérieur au perçage intérieur (9).

15. Limiteur de pression selon la revendication 13,
**caractérisé par le fait**
**que** le ressort de soupape (6) est disposé entre le carter de soupape (2) et le piston de soupape (10a) et est tendu entre le patin de soupape (24) et le carter de soupape (2).

16. Limiteur de pression selon la revendication 13,
**caractérisé par le fait**
**que** le ressort de soupape (6) en-dehors du carter de soupape (2) est disposé de façon complète et est tendu entre le patin de soupape (24) également disposé en-dehors du carter de soupape (2) et une partie intérieure (78) en forme d'anneau sur le carter de soupape (2).

17. Limiteur de pression selon la revendication 14 et la revendication 16,
**caractérisé par le fait**
**que** l'anneau d'insertion (77) peut être introduit dans le perçage intérieur (9) et est conçu de manière à servir de soutien contre un bord du boîtier (79) peu avant l'anneau d'étanchéité supérieur (80).
